## Europäisches Patentamt
## European Patent Office
## Office européen des brevets

(11) Veröffentlichungsnummer: **0 123 853**
**B1**

(12) # EUROPÄISCHE PATENTSCHRIFT

(45) Veröffentlichungstag der Patentschrift:
15.10.86

(51) Int. Cl.⁴: **F 16 J 15/32**

(21) Anmeldenummer: 84102888.9

(22) Anmeldetag: 16.03.84

(54) Laufring.

(30) Priorität: 02.05.83 DE 3315908

(43) Veröffentlichungstag der Anmeldung:
07.11.84 Patentblatt 84/45

(45) Bekanntmachung des Hinweises auf die Patenterteilung:
15.10.86 Patentblatt 86/42

(84) Benannte Vertragsstaaten:
FR GB IT

(56) Entgegenhaltungen:
DE-A-2 331 412
DE-A-3 212 477

(73) Patentinhaber: GOETZE AG, Bürgermeister-Schmidt- Strasse 17, D-5093 Burscheid 1 (DE)

(72) Erfinder: Otto, Volkmar, Dipl.- Ing., Quettinger Strasse 150, D-5090 Leverkusen 3 (DE)

LIBER, STOCKHOLM 1986

EP 0 123 853 B1

**Beschreibung**

Die Erfindung betrifft einen Laufring für insbesondere radial wirkende Wellendichtringe, der mit einem korrespondierenden Maschinenteil über eine Gummischicht drehfest verbunden ist und eine von dem Maschinenteil beabstandete Lauffläche aufweist.

Durch die DE—A—19 56 024 ist bereits ein Laufring für einen Radial-Wellendichtring bekannt, der auf seiner radial inneren Seite eine umlaufende Ausnehmung aufweist, die zu der Flüssigkeitsseite hin offen ist. Durch diese Maßnahme soll das Medium in den so gebildeten Spalt zwischen Welle und Laufringfläche gefördert werden, welches die durch Reibung zwischen der Dichtlippe und der Lauffläche entstehende Wärme abführen soll. Nachteilig ist hier zu sehen, daß das Medium zwar in den Spalt eindringen, es jedoch bedingt durch die Spaltgestaltung nur schwer wieder entfernt werden kann. Vielmehr ist in diesem Bereich mit turbulenten Strömungen zu rechnen, die einer kontinuierlichen Wärmeabfuhr nicht dienlich sind.

Der DE—C—23 00 099 ist ein Lippendichtungsring gemäß Oberbergriff des Anspruche 1 mit Laufring zu entnehmen, der über eine Gummischicht mit einer Welle verbunden ist. Nachteilig ist hier zu sehen, daß sich die Gummischicht über die gesamte axiale Höhe des Laufringes erstreckt, so daß nur eine ungenügende Wärmeabfuhr, insbesondere im Reibungsbereich zwischen Dichtlippe und Laufring, stattfinden kann. Selbst analog zur DE—A—19 56 024 in den Gummikörper eingebrachte Taschen oder die Verwendung eines wärmeleitfähigeren Gummis haben keine deutliche Verbesserung der Wärmeabfuhr gebracht.

Ausgehend von diesem Stand der Technik liegt der Erfindung die Aufgabe zugrunde, einen Laufring dahingehend zu verbessern, daß die durch Reibung zwischen den einzelnen Bauteilen entstehende Wärme sicher abgeführt wird.

Diese Aufgabe wird erfindungsgemäß gelöst durch mehrere aus dem Laufring herausgeformte in Richtung auf das korrespondierende Maschinenteil weisende und daran anliegende Zungen. Mittels dieser Zungen wird eine optimale Wärmeabfuhr vom Laufring auf das korrespondierende Maschinenteil, welches üblicherweise durch eine umlaufende Welle gebildet ist, erzielt. Um den Effekt noch zu erhöhen wird vorgeschlagen, den Wellendichtring in Relation zum Laufring so zu positionieren, daß die Dichtlippe in unmittelbarer Nähe der abgebogenen Zungen umläuft. Durch diese Maßnahme kann der Wärmeübergang auf die Zungen und somit auf das korrespondierende Maschinenteil nicht nur kontinuierlich, sondern auch wesentlich schneller erfolgen.

Einem weiteren Gedanken der Erfindung gemäß sind die Zungen in mindestens einem Endbereich des Laufringes vorgesehen. Je nach Anwendungsfall ist es jedoch ebenfalls denkbar, beide Endbereiche zu profilieren, um so die anfallende Wärmemenge noch gezielter abführen zu können. Sind die Zungen nur in einem Endbereich angeordnet, so wird vorgeschlagen, diese im Bereich des abzudichtenden Mediums auszubilden. Somit kann zusätzlich zu dem bereits erzielten Effekt auch das Medium als Wärmetransportmittel herangezogen werden.

Eine bevorzugte Ausbildung der Zungen wird darin gesehen, in einen gestanzten und gegebenenfalls abgewinkelten Blechkörper, in Umfangsrichtung gesehen, ein kurvenförmiges Profil einzuarbeiten. Alternativ dazu können die Zungen jedoch auch durch axials oder geneigt dazu verlaufende Schlitze gebildet werden.

Um unabhängig von Einbautoleranzen zu werden, wird weiterhin vorgeschlagen, daß die Zungen in radialer Richtung federnd ausgebildet sind. Diese liegen dann unter mehr oder weniger starker Anpreßkraft an dem korrespondierenden Maschinenteil an.

Ausgehend von der mit dem korrespondierenden Maschinenteil zusammenwirkenden, axial durchgehenden, schlecht leitenden Gummischicht wird diese nummehr in einen nur partiell in den Freiraum zwischen Laufring und Maschinenteil befindlichen Spalt als statischer Dichtkörper eingebracht, wobei die Drehmomentübertragung jedoch nicht beeinträchtigt werden soll. Der Dichtkörper kann sowohl ein separates Bauteil (z.B. ein O-Ring) oder aber fest mit dem Laufring verbunden sein. Ist er einstückig mit dem Laufring ausgebildet, so besteht die Möglichkeit, gegebenenfalls aus Korrosionsgründen den Bereich der federnden Zungen mit einer aus dem Dichtkörper herausgeformten Elastomerschicht au versehen. Diese kann jedoch nur im Bereich der dem Maschinenteil abgewandten Umfangsfläche aufgebracht werden, um die Wärmeabfuhr nicht zu beeinträchtigen.

Zur Fernhaltung von Schmutz oder dergleichen von der eigentlichen Dichtlippe kann es sinnvoll sein, im Bereich der dann bevorzugt auf der dem Medium abgewandten Seite des Laufringes angeordneten Zungen einem umlaufenden Schleuderkragen anzuformen, der aus Gründen der einfacheren Herstellung unmittelbar aus der Elastomerschicht herausgeformt sein kann.

Die Erfindung ist in der Zeichnung dargestellt und wird im folgenden näher beschrieben. Es zeigen

Figuren 1—6 unterschiedliche Varianten eines Laufringes gemäß der Erfindung.

In den Figuren 1 bis 6 sind unterschiedliche Gestaltungen von Laufringen 1 dargestellt, wobei die Figuren 2 und 4 den erfindungsgemäßen Gedanken klarer herausstellen sollen. Der Laufring 1 ist im wesentlichen zylindrisch ausgebildet und über einen Dichtkörper 2 drehfest und statisch dicht mit einer Welle 3 verbunden. Zur Vereinfachung ist der Dichtkörper 2 durch Vulkanisation mit dem Laufring 1 verbunden. Der Laufring 1 ist mit definiertem radialem Abstand zur Welle 3 angeordnet.

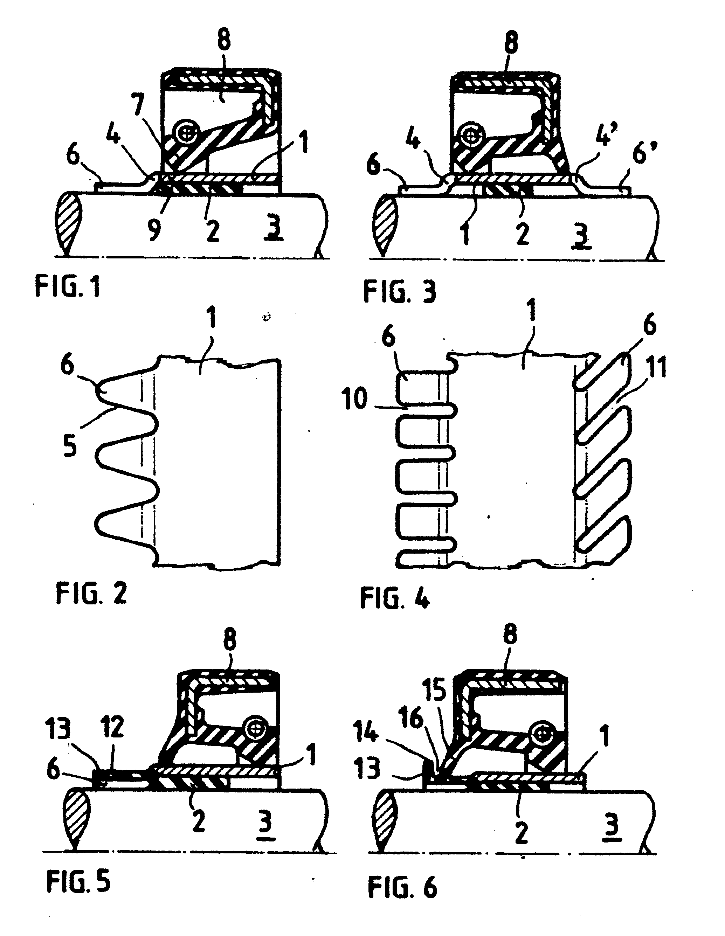

Gemäß den Figuren 1 und 2 ist der mediumseitige Endbereich 4 des Laufringes 1 mit einem kurvenförmigen in Umfangsrichtung verlaufenden Profil 5 versehen. Die so gebildeten Zungen 6 werden abgewinkelt und liegen unter leichtem federnden Anpreßdruck auf der Welle 3 auf. Die Dichtlippe 7 eines Wellendichtringes 8 ist in unmittelbarer Nähe des Übergangsbereiches 9 des zylindrischen in den zungenförmigen Bereich 6 angeordnet. Durch diese Maßnahme kann die durch Reibung entstehende Wärme unmittelbar in die Zungen 6 und somit auf die Welle 3 übertragen werden.

In ähnlicher Weise sind die Figuren 3 und 4 zu sehen. Hier sind in beiden Endbereichen 4,4' radial federnde Zungen 6,6' eingebracht, die durch Einbringen von axialen Schlitzen 10 beziehungsweise dazu geneigt verlaufenden Schlitzen 11 geformt werden. Der Dichtkörper 2 ist hier etwa im axial mittleren Bereich des Laufringes 1 angeordnet.

Die in den Figuren 5 und 6 dargestellten Laufringe 1 sind vom Aufbau her etwa analog zu Figur 1 zu sehen. In beiden Fällen sind jedoch die der Welle abgewandten Umfangsflächen 12 mit einer aus dem gleichen Material wie der Dichtkörper 2 bestehenden elastomeren Schicht 13 versehen. Diese soll dem zungenförmigen Bereich 6, der in diesem Fall vom Medium weg gerichtet ist, als Korrosionsschutz dienen.

Figur 6 zeigt darüberhinaus noch einen aus der Schicht 13 herausgeformten Schleuderkragen 14, der zur Schmutzabweisung dienen und gegebenenfalls mit einer zusätzlichen Schutzlippe 15 des Wellendichtringes 8 einen Labyrinthspalt 16 bilden soll.

## Patentansprüche

1. Laufring (1) für insbesondere radial wirkende Wellendichtringe, der mit einem korrespondierenden Maschinenteil (3) über eine Gummischicht (2) drehfest verbunden ist und eine von dem Maschinenteil beabstandete Lauffläche aufweist, gekennzeichnet durch mehrere aus dem Laufring (1) herausgeformte und am korrespondierenden Maschinenteil (3) anliegende Zungen (6).

2. Laufring nach Anspruch 1, dadurch gekennzeichnet, daß die wärmeerzeugende Laufspur der Dichtlippe (7) in unmittelbarer Nähe der Zungen (6) vorgesehen ist.

3. Laufring nach den Ansprüchen 1 und 2, dadurch gekennzeichnet, daß die Zungen (6) in mindestens einem Endbereich (4) des Laufringes (1) angeordnet sind.

4. Laufring nach den Ansprüchen 1 bis 3, dadurch gekennzeichnet daß die Zungen (6) im wesentlichen axial in Richtung auf das abzudichtende Medium gerichtet sind.

5. Laufring nach den Ansprüchen 1 bis 4, dadurch gekennzeichnet, daß der Endbereich (4) des Laufringes (1) in Umfangsrichtung gesehen ein kurvenförmiges Profil (5) aufweist.

6. Laufring nach den Ansprüchen 1 bis 4, dadurch gekennzeichnet, daß die Zungen (6, 6') durch axial oder geneigt dazu verlaufende Schlitze (10, 11) gebildet sind.

7. Laufring nach den Ansprüchen 1 bis 6, dadurch gekennzeichnet, daß die Zungen (6, 6') federnd ausgebildet sind.

8. Laufring nach den Ansprüchen 1 bis 7, gekennzeichnet durch mindestens einen sich zwischen der erhabenen Lauffläche und dem Maschinenteil (3) erstreckenden Dichtkörper (2), der ausschließlich in einem Teilbereich der Lauffläche angeordnet ist.

9. Laufring nach den Ansprüchen 1 bis 8, dadurch gekennzeichnet, daß die dem Maschinenteil (3) abgewandte Umfangsfläche (12) der Zungen (6) mit einer elastomeren Schicht (13) versehen ist.

10. Laufring nach den Ansprüchen 1 bis 9, dadurch gekennzeichnet, daß die Schicht (13) einstückig mit dem Dichtkörper (2) verbunden ist.

11. Laufring nach den Ansprüchen 9 und 10, gekennzeichnet durch mindestens einen im Bereich der Zungen (6) vorgesehenen Schleuderkragen (14).

12. Laufring nach den Ansprüchen 9 bis 11, dadurch gekennzeichnet, daß der Schleuderkragen (14) aus der Schicht (13) herausgeformt ist.

13. Laufring nach den Ansprüchen 9 bis 12, dadurch gekennzeichnet, daß der Schleuderkragen (14) auf der dem Medium abgewandten Seite des Laufringes (1) angeordnet ist.

## Revendications

1. Bague d'usure pour, en particulier, une bague à lèvres avec ressort agissant radialement, laquelle est assujettie snas posibilité de rotation à une pièce de machine correspondante (3) audessus d'une couche de caoutchouc (2) et comporte une surface d'usure écartée de la pièce de machine, caractérisée par plusieurs languettes (6) formées à partir de la bague d'usure (1) et ajustées à la bague de machine (3) correspondante.

2. Bague d'usure selon la revendication 1, caractérisée en ce que la trace de rotation calorifique de la lèvre d'étanchéité (7) est prévue à proximité étanche des languettes (6).

3. Bague d'usure selon les revendications 1 et 2, caractérisée en ce que les baguettes (6) sont disposées au moins à une extrémité (4) de la bague d'usure (1).

4. Bague d'usure selon les revendications 1 à 3, caractérisée en ce que les languettes (6) sont sensiblement dirigées axialement dans la direction du milieu faisant étanchéité.

5. Bague d'usure selon les revendications 1 à 4, caractérisée en ce que l'extrémité (4) de la bague d'usure (1) comporte, vu dans la direction de périphérie, un profil courbe (5).

6. Bague d'usure selon les revendications 1 à 4, caractérisée en ce que les languettes (6, 6') sont formées par des entailles (10, 11) axiales ou inclinées par rapport à l'axe.

7. Bague d'usure selon les revendications 1 à 6, caractérisée en ce que les languettes (6, 6') sont élastiques.

8. Bague d'usure selon les revendications 1 à 7, caractérisée par au moins un corps d'étanchéeité (2) s'étendant entre la surface d'usure convexe et la bague de machine (3), lequel coprs étanche est disposé exclusivement dans une partie de la surface d'usure.

9. Bague d'usure selon les revendications 1 à 8, caractérisée en ce que la surface périphérique (12) des languettes (6) écartées de la pièce de machine (3) est couverte d'une couche élastomère (13).

10. Bague d'usure selon les revendications 1 à 9, caractérisée en ce que la couche (13) et le corps d'étanchéité (12) sont faits d'une seule pièce.

11. Bague d'usure selon les revendications 9 et 10, caractérisée par au moins une collerette centrifuge (14) prévue dans la zone de languettes (6).

12. Bague d'usure selon les revendications 9 à 11, caractérisée en ce que la collerette centrifuge (14) est formée à partir de la couche (13).

13. Bague d'usure selon les revendications 9 à 12, caractérisée en ce que la collerette centrifuge (14) est disposée sur le côté de la bague d'usure (1) écarté du milieu.

**Claims**

1. Wear sleeve (1) for in particular radially acting shaft seals, connected in a torsionally rigid manner to a corresponding machine member (3) by way of a rubber coating (2) and possessing a running surface located at a distance from the machine member, characterized by a number of lugs (6) formed out of the wear sleeve (1) and resting against the corresponding machine member (3).

2. Wear sleeve according to Claim 1, characterized by the fact that the heat-generating running path of the sealing lip (7) is situated in direct proximity to the lugs (6).

3. Wear sleeve according to Claims 1 and 2, characterized by the fact that the lugs (6) are positioned in at least one end region (4) of the wear sleeve (1).

4. Wear sleeve according to Claims 1 to 3, characterized by the fact the lugs (6) are essentially oriented axially in the direction of the medium to be sealed off.

5. Wear sleeve according to Claims 1 to 4, characterized by the fact that the end region (4) of the wear sleeve (1), viewed circumferentially, possesses a curved profile (5).

6. Wear sleeve according to Claims 1 to 4, characterized by the fact that the lugs (6, 6') are formed by slots (10, 11) running in axial direction or at an incline thereto.

7. Wear sleeve according to Claims 1 to 6, characterized by the fact that the lugs (6, 6') are resilient.

8. Wear sleeve according to Claims 1 to 7, characterized by at least one sealing element (2) positioned between the raised running surface and the machine member (3) and extending over only a part of the running surface.

9. Wear sleeve according to Claims 1 to 8, characterized by the fact that the circumferential surface (12) of the lugs (6) facing away from the machine member (3) has an elastomer coating (13).

10. Wear sleeve according to Claims 1 to 9, characterized by the fact that the coating (13) forms a single piece with the sealing element (2).

11. Wear sleeve according to Claims 9 and 10, characterized by at least one centrifugal collar (14) provided in the region of the lugs (6).

12. Wear sleeve according to Claims 9 to 11, characterized by the fact that the centrifugal collar (14) is formed out of the coating (13).

13. Wear sleeve according to Claims 9 to 12, characterized by the fact that the centrifugal collar (14) is positioned on the side of the wear sleeve (1) facing away from the medium.

FIG. 1

FIG. 3

FIG. 2

FIG. 4

FIG. 5

FIG. 6